# EUROPÄISCHE PATENTSCHRIFT

(11) **EP 2 535 731 B1**
(45) Veröffentlichungstag und Bekanntmachung des Hinweises auf die Patenterteilung: **31.12.2014**
(21) Anmeldenummer: 12004430.0
(22) Anmeldetag: 12.06.2012
(51) Int. Cl.: G01S 5/00, G01S 19/21

(54) **Vorrichtung zur Fahrzeug-Ortung und -Verfolgung**
Device for vehicle location and tracking
Dispositif de localisation et de suivi d'un véhicule

(30) Priorität: 15.06.2011 DE 102011106507
(43) Veröffentlichungstag der Anmeldung: 19.12.2012
(73) Patentinhaber: Astrium GmbH, 82024 Taufkirchen (DE)
(72) Erfinder: Wendel, Jan Dr., 81373 München (DE)
(74) Vertreter: Avenhaus, Beate

(56) Entgegenhaltungen:
- EP-A1- 1 489 432
- EP-A2- 1 363 421
- US-B1- 6 240 365

## Beschreibung

Die Erfindung betrifft eine Vorrichtung zur Fahrzeug-Ortung und -Verfolgung gemäß Anspruch 1.

Um entwendete, insbesondere gestohlene Fahrzeuge wie Personen- und Lastkraftwaren, Schiffe oder Flugzeuge zu orten (detecting) und zu verfolgen (tracking), werden Ortungs- und Verfolgungs-Vorrichtungen eingesetzt, welche die aktuell ermittelte globale Position eines Fahrzeugs über eine Fernkommunikationsverbindung beispielsweise mittels eines Mobilfunksystems wie GSM (Global System for Mobile Communication) einem Ortungs- und Verfolgungs-Dienst melden können.

Die Ortungs- und Verfolgungs-Vorrichtungen nutzen für die globale Positionsermittlung überwiegend Satellitennavigationssysteme GNSS (Global Navigation Satellite System) wie das global verfügbare GPS (Global Positioning System). In Zukunft wird das europäische Satellitennavigationssystem GALILEO hierfür ebenfalls genutzt werden können. Die aktuell ermittelte globale Position eines Fahrzeugs kann entweder auf Anforderung vom Ortungs- und Verfolgungs-Dienst oder bei einem bestimmten Ereignis wie beispielsweise der Aktivierung einer Alarmanlage im Fahrzeug automatisch von einer Ortungs- und Verfolgungs-Vorrichtung an den Dienst übermittelt werden.

Um die Ortung des Fahrzeugs zu verhindern, werden zunehmend sogenannte Jammer wie beispielsweise GPS-Jammer eingesetzt. Jammer sind Störsender, die den Empfang von Navigationssignalen eines Satellitennavigationssystems zur Ortung verhindern. Jammer können auch derart ausgelegt sein, dass nicht nur der Empfang von Navigationssignalen, sondern auch von Mobilfunksignalen gestört wird, so dass eine Ortungs- und Verfolgungs-Vorrichtung auch keine Mobilfunksignale von einem Ortungs- und Verfolgungs-Dienst und beispielsweise von einem derartigen Dienst per Mobilfunk übermittelte Anforderungen zur Mitteilung der aktuellen Position empfangen kann.

Alternativ können auch Spoofing-Sender genutzt werden, um eine genaue Fahrzeug-Ortung zu verhindern. Spoofing-Sender stören die Ortung durch das Aussenden gefälschter imitierter Navigationssignale. GPS-Spoofing-Sender erzeugen GPS-Signale mit formal gültigen, aber falschen Positionsdaten. Spoofing ist in der Regel aufwendiger als Jamming, da die Erzeugung gefälschter Navigationssignale zumindest derzeit noch einen hohen technischen Aufwand erfordert.

Sowohl Jammer als auch Spoofing-Sender werden hierin allgemein unter dem Begriff Störsender zusammengefasst.

EP1363421A2 beschreibt ein System und ein Verfahren zum Erkennen eines Jamming-Signals durch Spektrumanalyse und Suchen nach ungewöhnlichen Spektralmustern.

EP1489432A1 betrifft die Erkennung von Störungen von GPS basierend auf zu Grundrauschwerten korrespondierend zu Störpegeln. Hierbei wird zunächst ein Grundrauschwert eines empfangenden GPS-Signals und anschließend ein Störsignal basierend auf dem Grundrauschwert erkannt. Der Störpegel des Störsignals wird anhand des Grundrauschwertes ermittelt, wobei der Pegel des Grundrauschwertes einem bestimmten Störpegel entspricht.

US6240365B1 beschreibt eine automatisiertes System zur Fahrzeug-Ortung und -Verfolgung, bei dem ein Fahrzeug seine aktuelle per GPS ermittelte Position an einen zentralen Computer über einen Kommunikationskanal übermittelt.

Es ist nun eine Aufgabe der vorliegenden Erfindung, eine insbesondere auf Satellitennavigation basierende Vorrichtung zur Fahrzeug-Ortung und-Verfolgung zu verbessern.

Diese Aufgabe wird durch eine Vorrichtung zur Fahrzeug-Ortung und-Verfolgung mit den Merkmalen von Anspruch 1 gelöst. Weitere Ausgestaltungen der Erfindung sind Gegenstand der abhängigen Ansprüche.

Eine der Erfindung zugrunde liegende Idee besteht darin, dass eine zur Fahrzeug-Ortung und -Verfolgung vorgesehene, insbesondere auf Satellitennavigation basierende Vorrichtung derart erweitert wird, dass sie selbst einen Störsender wie einen aktivierten Jammer und/oder einen Spoofing-Sender erkennen kann. Zum Erkennen von einem Jamming und/oder Spoofing verursachenden Störsenders können nach der Erfindung eine oder mehrere verschiedene Maßnahmen alternativ oder teilweise auch kombiniert eingesetzt werden:
- ein in der Positionsbestimmungsvorrichtung eingesetzter Empfänger für Positionsbestimmungssignale wie Navigationssignale eines Satellitennavigationssystems kann beispielsweise einen oder mehrere Empfangsparameter von empfangenen Positionsbestimmungssignalen überwachen, um einen Störsender zu erkennen, der diese Parameter beeinflusst;
- der Empfänger für Positionsbestimmungssignale kann auch einen Störsender daran erkennen, dass er während einer vorgegebenen Zeitspanne keine Positionsbestimmung durchführen kann, da dies ein Indiz für den Einsatz eines Jamming-Störsenders ist;
- Messungen des Empfängers für Positionsbestimmungssignale können auch auf Konsistenz überprüft werden, insbesondere im Falle von Navigationssignalen eines Satellitennavigationssystems unter Einsatz von bekannten Integritätsüberwachungstechniken wie RAIM (Receiver Integrity Autonomous Integrity Monitoring), wodurch Signale von Spoofing- Störsendern erkannt werden können;
- Messungen des Empfängers für Positionsbestimmungssignale können auch mit Messungen anderer Sensoren wie einem Wegstreckenmesser oder einem Geschwindigkeitsmesser verglichen werden, um signifikante Abweichungen feststellen zu können, die auf den Einsatz eines Spoofing-Störsenders hindeuten;
- schließlich kann auch eine speziell für die Erkennung von Jammern und/oder Spoofing-Störsendern geeignete Vorrichtung (Jammer/Spoofing-Detektor) eingesetzt werden.

Die Erfindung besitzt den Vorteil, dass sie in den meisten Situationen trotz des Einsatzes von Störsendern die Ortung eines entwendeten Fahrzeugs möglich ist. Die Erfindung ermöglicht ferner die Initiierung weiterer Maßnahmen bei Erkennen eines Störsenders, welche das Entwenden eines Fahrzeugs erschweren oder gar verhindern können. Durch das erfindungsgemäße Erkennen eines aktivierten Störsenders, insbesondere eines Jammers oder Spoofing-Störenders, kann weiterhin eine Verbesserung der Fahrzeug-Ortung und -Verfolgung auf verschiedene Arten ermöglichen. Beispielsweise kann ein Fahrzeug-Ortungs- und Verfolgungsdienst über das Erkennen des Störsenders informiert werden, insbesondere mittels einer Mobilfunkverbindung, da Störsender in der Regel nur den Empfang von Funksignalen, nicht aber das Senden stören können. Ein erkannter Störsender kann auch eine bestimmte Aktion auslösen, beispielsweise eine Blockade eines entwendeten Fahrzeugs, das Umschalten auf einen anderen Kommunikationskanal zum Empfangen von Signalen zur Ortung oder das Ausweichen auf eine alternative Ortungsmethode, beispielsweise mittels Mobilfunk.

Eine Ausführungsform der Erfindung betrifft nun eine Vorrichtung zur Fahrzeug-Ortung und -Verfolgung mit einer Positionsbestimmungsvorrichtung zum Ermitteln einer aktuellen Fahrzeugposition, einer Sendevorrichtung zum Übermitteln der aktuellen Fahrzeugposition an einen Empfänger über einen Kommunikationskanal, und Mitteln zum Erkennen eines aktivierten Störsenders und zum Auslösen einer Aktion abhängig von Erkennen eines aktivierten Störsenders.

Die Mittel zum Erkennen eines aktivierten Störsenders können einen in der Positionsbestimmungsvorrichtung eingesetzten Empfänger für Positionsbestimmungssignale, insbesondere Navigationssignale eines Satellitennavigationssystems, aufweisen, wobei der Empfänger ausgebildet ist, einen oder mehrere Empfangsparameter von empfangenen Positionsbestimmungssignalen zu überwachen, um einen Störsender zu erkennen, der diese Parameter beeinflusst. Beispielsweise können ein oder mehrere Empfänger-inteme Messwerte von Navigationssignalen, beispielsweise GPS-Signalen, überwacht werden, welche für die Nachverfolgung und/oder Erfassung von Navigationssignalen relevant sind, wie die Empfangssignalstärke, der Träger-Rauschabstand (carrier to noise density ratio), die statistische Verteilung von durch ein Front-End des Empfängers bereitgestellten Abtastwerten oder andere Messwerte. Da vor allem Jamming solche Messwerte beeinflusst, können dadurch insbesondere Jamming-Störsender erkannt werden.

Die Mittel zum Erkennen eines aktivierten Störsenders können auch einen in der Positionsbestimmungsvorrichtung eingesetzten Empfänger für Positionsbestimmungssignale, insbesondere Navigationssignale eines Satellitennavigationssystems, aufweisen, wobei der Empfänger ausgebildet ist, einen Störsender daran zu erkennen, dass der Empfänger während einer vorgegebenen Zeitspanne keine Positionsbestimmung durchführen kann. Da vor allem Jamming-Störsender den Empfang von Navigationssignalen so stark stören, dass während des aktiven Jammings keine Positionsbestimmung möglich ist, können dadurch vorwiegend Jamming-Störsender erkannt werden.

Die Mittel zum Erkennen eines aktivierten Störsenders können weiterhin einen in der Positionsbestimmungsvorrichtung eingesetzten Empfänger für Positionsbestimmungssignale, insbesondere Navigationssignale eines Satellitennavigationssystems, aufweisen, wobei der Empfänger ausgebildet ist, Messungen von Positionsbestimmungssignalen auf Konsistenz zu überprüfen, insbesondere unter Einsatz einer RAIM (Receiver Autonomous Integrity Monitoring)-Technik. Mit RAIM-Techniken können empfangene Navigationssignale auf Integrität überprüft werden, insbesondere falsche Navigationssignale erkannt und von der Positionsermittlung ausgeschlossen werden. Daher eignet sich diese Technik besonders gut zum Erkennen von Spoofing-Störsendern. Sie ist aber auf für die Detektion von Jamming-Störsendern geeignet, wenn beispielsweise durch Jamming gestörte, insbesondere dadurch verfälschte Navigationssignale empfangen werden.

Die Mittel zum Erkennen eines aktivierten Störsenders können auch einen in der Positionsbestimmungsvorrichtung eingesetzten Empfänger für Positionsbestimmungssignale, insbesondere Navigationssignale eines Satellitennavigationssystems, aufweisen, wobei der Empfänger ausgebildet ist, Messungen von Positionsbestimmungssignalen mit Messungen anderer Sensoren, insbesondere einem Wegstreckenmesser und/oder einem Geschwindigkeitsmesser, zu vergleichen, um signifikante Abweichungen feststellen zu können, die auf den Einsatz eines Störsenders, insbesondere eines Spoofing-Störsenders hindeuten. Wenn beispielsweise eine signifikante Abweichung der mit einem Geschwindigkeitsmesser ermittelten Geschwindigkeit eines Fahrzeugs von der mittels Navigationssignalen, insbesondere GPS-Signalen, ermittelten Fahrzeuggeschwindigkeit auftritt, kann dies ein Indiz für einen Spoofing-Störsender sein, der gefälschte Navigationssignale aussendet.

Die Mittel zum Erkennen eines aktivierten Störsenders können auch eine speziell für die Erkennung von Störsendern geeignete Vorrichtung aufweisen, beispielsweise einen Jamming-/Spoofing-Detektor.

Die Mittel zum Auslösen einer Aktion abhängig von Erkennen eines aktivierten Störsenders können ausgebildet sein, über die Sendevorrichtung eine Mitteilung über einen erkannten Störsender über den Kommunikationskanal, insbesondere einen Mobilfunkkanal, zu übermitteln. Beispielsweise kann die Mitteilung genutzt werden, eine ungefähre aktuelle Position eines Fahrzeugs zu ermitteln, beispielsweise mit einer der in Mobilfunksystemen eingesetzten bekannten Methoden zur Positionsermittlung von Mobilfunkteilnehmern. Die Mitteilung kann auch Daten über die aktuelle Fahrzeugposition enthalten, die über einen anderen Weg ermittelt wurden, beispielsweise über eine Wegstreckenmessung oder eine Ortung über Mobilfunksignale.

Die Mittel zum Auslösen einer Aktion abhängig von Erkennen eines aktivierten Störsenders können auch ausgebildet sein, eine Fahrzeugblockade zu initiieren. Beispielsweise kann eine Wegfahrsperre aktiviert werden, wenn ein Störsender erkannt wurde, oder der Motor des Fahrzeugs kann abgeschaltet und die Motorsteuerung deaktiviert werden.

Die Mittel zum Auslösen einer Aktion abhängig von Erkennen eines aktivierten Störsenders können ferner ausgebildet sein, zum Aufheben der Fahrzeugblockade eine Authentifikation anzufordem. Beispielsweise kann nach einer Fahrzeugblockade bei erkanntem Störsender in einer Anzeigevorrichtung des Fahrzeugs eine Meldung angezeigt werden, dass das Fahrzeug blockiert ist und zur Aufhebung der Blockade die Eingabe eines Kodes erforderlich ist.

Weiterhin betrifft eine Ausführungsform der Erfindung die Verwendung einer Vorrichtung nach der Erfindung und wie vorstehend beschrieben in einem Objekt, insbesondere einem Fahrzeug, zur Ortung und Verfolgung des Objekts. Obwohl die erfindungsgemäße Vorrichtung im Zusammenhang mit der Ortung und Verfolgung eines Fahrzeugs oben beschrieben ist, ist sie grundsätzlich zur Ortung und Verfolgung von jeglichen bewegbaren Objekten wie beispielsweise Behältern zur Lagerung und zum Transport von Gütern geeignet. Anstellen eines Fahrzeug-Blockade kann bei einem Behälter beispielsweise eine zusätzliche Sicherheitsmaßnahme aktiviert werden, um das Öffnen des Behälters zu erschweren.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

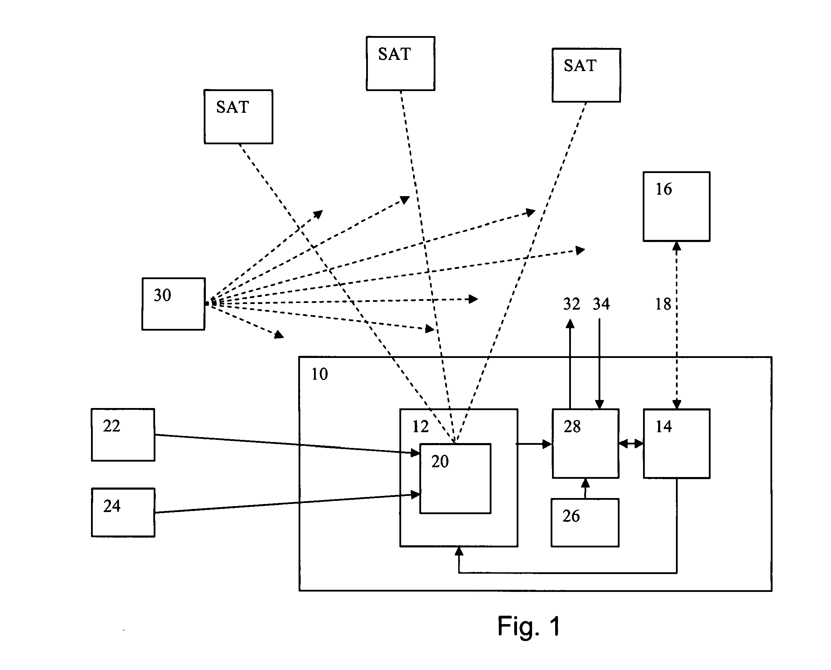

Die Zeichnungen zeigen in
Fig. 1 ein Blockschaltbild einer Vorrichtung zur Fahrzeug-Ortung und-Verfolgung gemäß der Erfindung.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen. Das folgende Ausführungsbeispiel der Erfindung wird in Zusammenhang mit dem GNSS GPS erläutert, obwohl die Erfindung grundsätzlich auch mit anderen GNSS wie GLONASS oder Galileo oder mit anderen Ortungsverfahren, beispielsweise auf Mobilfunk basierenden Ortungsverfahren, eingesetzt werden kann.

Die in Fig. 1 gezeigte GPS-basierte Fahrzeug-Ortungs- und -Verfolgungs-Vorrichtung 10 kann beispielsweise in ein Fahrzeug wie einen Personen- oder Lastkraftwagen, ein Flugzeug, ein Schiff oder einen Container für den Transport von Waren eingebaut werden. Die Vorrichtung 10 kann hierzu als Elektronikmodul mit eigener Stromversorgung durch eine Batterie oder Fremdstromversorgung über ein Fahrzeug-Bordnetz ausgebildet und in ein Gehäuse integriert sein. Alternativ kann die Vorrichtung 10 auch als Chipset zur Integration in beispielsweise ein elektronisches Steuergerät ECU (Electronic Control Unit) ausgebildet sein.

Die Vorrichtung 10 weist eine GPS-Positionsbestimmungsvorrichtung 12 auf, die einen GPS-Empfänger 20 und einen (nicht dargestellten) Prozessor zur Positionsbestimmung anhand von GPS-Daten aufweist. Der GPS-Empfänger 20 empfängt von GPS-Satelliten SAT GPS-Signale mit GPS-Daten zur Positionsbestimmung durch den Prozessor. Dem GPS-Empfänger 20 werden ferner Messungen eines Wegstreckenmessers 22 und eines Geschwindigkeitsmessers 24 zugeführt, die im Fahrzeug verbaut sind und zum Ermitteln einer zurückgelegten Wegstrecke und der aktuellen Fahrzeuggeschwindigkeit dienen.

Die Vorrichtung 10 weist ferner ein Mobilfunk-Kommunikationsmodul 14 auf, das eine Mobilfunkverbindung 18 mit einem externen Fahrzeug-Ortungs- und Verfolgungs-Dienstserver 16 aufbauen kann, insbesondere indem eine Mobilfunkdatenverbindung beispielsweise über das Internet mit dem Server 16 aufgebaut wird, über die ein Datenaustausch zwischen der Vorrichtung 10 und dem Server 16 erfolgen kann.

Weiterhin weist die Vorrichtung 10 einen (optionalen) Jamming/Spoofing-Detektor 26 zum Detektieren von Jamming oder Spoofing und eine Aktions-Auslöseeinheit 28 auf, die von der GPS-Positionsbestimmungsvorrichtung 12 und dem Jamming/Spoofing-Detektor 26 angesteuert werden kann, um eine bestimmte Aktion des Mobilfunk-Kommunikationsmoduls 14 auszulösen, wie im Folgenden noch genauer beschrieben wird.

Im normalen Betrieb ohne detektierten Jamming oder Spoofing im Bereich der Vorrichtung 10 ermittelt die GPS-Positionsbestimmungsvorrichtung 12 aus den vom GPS-Empfänger 20 von den Satelliten SAT empfangenen GPS-Signalen periodisch zu bestimmten vorgegebenen Zeitpunkten, z.B. jede Minute, oder kontinuierlich die aktuelle Position des Fahrzeugs und überträgt diese Position an die Aktions-Auslöseeinheit 28 beispielsweise zusammen mit einem Status-Flag "ok" für eine ungestörte Ortung. Die Einheit 28 kann die empfangenen Positionen zwischenspeichern, löschen oder an die Mobilfunk-Kommunikationsmodul 14 zusammen mit einem Steuerbefehl zum Übertragen an den Server 16 übermitteln. Umgekehrt kann auch der Server 16 einen Request zum Übertragen der aktuellen Fahrzeugposition über die Mobilfunkverbindung 18 an die Mobilfunk-Kommunikationsmodul 14 übertragen, die von der Aktions-Auslöseeinheit 28 oder von der GPS-Positionsbestimmungsvorrichtung 12 die aktuelle Position anfragt und diese nach Empfang an den Server 16 als Response über die Mobilfunkverbindung 18 zurücksendet.

Im gestörten Betrieb, d.h. wenn ein Jamming- oder Spoofing-Störsender 30 Störsignale im Bereich der Vorrichtung 10 aussendet, beispielsweise ein im Fahrzeug positionierter Störsender, kann der GPS-Empfänger 20 der GPS-Positionsbestimmungsvorrichtung 12 die Störung auf verschiedene Arten erkennen, von denen einzelne oder mehrere in der Vorrichtung 10 implementiert sein können. Bei dem im Folgenden beschriebenen Ausführungsbeispiel sind alle Arten der Erkennung des Störsenders 30 implementiert.

Der Empfänger 20 ist derart ausgebildet, dass die Empfangssignalstärke (Feldstärke) aller von Sendern empfangener Funksignale auswertet. Hierzu vergleicht der Empfänger 20 die Feldstärke der von den GPS-Satelliten SAT empfangen GPS-Signale und die vom Störsender 30 empfangenen Störsignale untereinander. Bei auffälligen Abweichungen erkennt der Empfänger 20 einen Störsender, beispielsweise wenn er beim Vergleich feststellt, dass die Empfangsfeldstärke der Störsignale des Störsenders 30 größer als die der GPS-Signale der Satelliten SAT ist. Weiterhin misst der Empfänger 20 den Träger-Rauschabstand (carrier to noise density ratio) der empfangenen Signale und klassifiziert Signale mit einem im Vergleich zu den anderen Signalen besonders großen Träger-Rauschabstand als Störsignale. Schließlich wertet der Empfänger 20 noch die statistische Verteilung der von seinem Front-End bereitgestellten Abtastwerte der empfangenen Signale aus, um Störsignale zu erkennen, die eine von den GPS-Signalen der Satelliten SAT in der Regel abweichende statistische Verteilung ihrer Abtastwerte aufweisen. Der GPS-Empfänger 20 gibt jedes Mal, wenn die überwachten Messwerte auf ein Störsignal hindeuten, ein Signal aus, welches das Erkennen eines Störsignals signalisiert.

Der Empfänger 20 ist weiterhin ausgebildet, die Zeitdauer zu messen, während der er überhaupt keine GPS-Signale der Satelliten SAT erfassen und verfolgen und somit keine Positionsbestimmung durchführen kann. Hierzu startet der Empfänger 20 einen internen Timer, sobald er überhaupt kein GPS-Signal erfassen kann. Der Timer läuft eine vorgegeben Zeitspanne und wird durch den Empfänger 20 zurückgesetzt, wenn dieser ein GPS-Signal erfasst. Wird der Timer nicht vor Ablauf der vorgegebenen Zeitspanne zurückgesetzt, gibt er das Signal aus, welches das Erkennen eines Störsignals signalisiert.

Der Empfänger 20 kann durch die oben beschriebenen Techniken vor allem Jamming-Störsender detektieren, die generell den Empfang der GPS-Signale der Satelliten SAT stören, insbesondere beeinträchtigen. Für die Erkennung von Spoofing-Störsendern ist der Empfänger 20 zudem wie im Folgenden beschrieben ausgebildet.

Der Empfänger 20 weist eine RAIM-Technik auf, mit der er Messungen aller empfangenen GPS-Signale auf Konsistenz überprüft. Stellt sich beim Einsatz der RAIM-Technik heraus, dass ein GPS-Signal nicht konsistent zu den anderen GPS-Signalen ist, gibt der Empfänger 20 wieder das Signal aus, welches das Erkennen eines Störsignals signalisiert. Als RAIM-Technik kann eine der bekannten und in einigen GPS-Empfängern bereits eingesetzte Technik verwendet werden.

Um eine noch genauere Detektion von Spoofing-Störsignalen zu gewährleisten, vergleicht der Empfänger 20 ferner die Messungen der GPS-Signale, insbesondere die hieraus ermittelten Informationen wie Geschwindigkeit und Bewegungsrichtung, mit den Messungen eines Geschwindigkeitssensors und eines Wegstreckenmessers. Stellt der Empfänger 20 zwischen den Messungen eines GPS-Signals und den Messungen der Sensoren signifikante Abweichungen fest, gibt er das Signal aus, welches das Erkennen eines Störsignals signalisiert.

Das vom GPS-Empfänger 20 ausgegebene, das Erkennen eines Störsignals signalisierende Signal bewirkt in der GPS-Positionsbestimmungsvorrichtung 12, dass das Status-Flag für eine ungestörte Ortung auf "not ok" gesetzt wird.

Sobald die Aktions-Auslöseeinheit 28 von der GPS-Positionsbestimmungsvorrichtung 12 das auf "not ok" gesetzte Status-Flag für ungestörte Ortung empfängt oder ihr vom Jamming/Spoofing-Detektor 26 ein erkannter Störsender 30 signalisiert wird, löst sie eine vorgegebene Aktion wie folgt aus.

Zunächst gibt sie ein Blockiersignal 32 aus, das an eine Motorsteuerung des Fahrzeugs übermittel wird und den Motor des Fahrzeugs abstellt und ein Starten des Motors bis zu einer Freigabe durch Empfangen eines Authentifikationssignals 34 blockiert.

Weiterhin übermittelt die Auslöseeinheit 28 einen Befehl an das Mobilfunk-Kommunikationsmodul 14, über den Mobilfunkkanal 18 dem Dienstserver 16 mitzuteilen, dass ein Störsender 30 erkannt wurde. Anhand der über den Mobilfunkkanal und die Mobilfunkverbindung zwischen dem Mobilfunk-Kommunikationsmodul 14 und einer Basisstation des Mobilfunknetzes, über das die Mobilfunkverbindung aufgebaut wurde, kann der Dienstserver 16 den ungefähren aktuellen Standort des Fahrzeugs ermitteln, beispielsweise anhand der Position der Basisstation.

Die vorliegende Erfindung ermöglicht eine verbesserte Ortung und Verfolgung von Fahrzeugen oder Transportbehältern für Waren, indem ein Störsender erkannt und daraufhin eine bestimmte Aktion ausgelöst wird, beispielsweise eine Mitteilung über einen ungestörten Kommunikationskanal wie einen Mobilfunkkanal übermittelt wird, so dass weitere Maßnahme zur Ortung des Fahrzeugs bzw. Transportbehälters initiiert werden können.

### BEZUGSZEICHEN UND AKRONYME

- 10: GPS-basierte Fahrzeug-Ortungs- und -Verfolgungs-Vorrichtung
- 12: GPS-Positionsbestimmungsvorrichtung
- 14: Mobilfunk-Kommunikationsmodul
- 16: Fahrzeug-Ortungs- und Verfolgungs-Dienstserver
- 18: Mobilfunkkanal
- 20: GPS-Empfänger
- 22: Wegstreckenmesser
- 24: Geschwindigkeitsmesser
- 26: Jamming/Spoofing-Detektor
- 28: Aktions-Auslöseeinheit
- 30: Störsender
- 32: Blockiersignal
- 34: Authentifikationssignal
- GNSS: Global Navigation Satellite System
- GPS: Global Positioning System
- RAIM: Receiver Autonomous Integrity Monitoring
- SAT: GPS-Satellit

## Patentansprüche

1. Vorrichtung (10) zur Fahrzeug-Ortung und -Verfolgung mit einer Positionsbestimmungsvorrichtung (12) zum Ermitteln einer aktuellen Fahrzeugposition, und
einer Sendevorrichtung (14) zum Übermitteln der aktuellen Fahrzeugposition an einen Empfänger (16) über einen Kommunikationskanal (18),
**gekennzeichnet durch**
Mittel (20, 26, 28) zum Erkennen eines aktivierten Störsenders (30), der im Bereich der Vorrichtung (10) ein Störsignal aussendet, und zum Auslösen einer Aktion abhängig von Erkennen eines aktivierten Störsenders, wobei die Mittel (20, 26, 28) zum Erkennen eines aktivierten Störsenders (30) einen in der Positionsbestimmungsvorrichtung (12) eingesetzten Empfänger (20) für Positionsbestimmungssignale, insbesondere Navigationssignale eines Satellitennavigationssystems, aufweisen, wobei der Empfänger (20) ausgebildet ist, einen oder mehrere Empfangsparameter von empfangenen Positionsbestimmungssignalen zu überwachen, um den Störsender (30) zu erkennen, der diese Parameter beeinflusst, wobei als Empfangsparameter Empfänger-interne Messwerte von empfangenen Positionsbestimmungssignalen wie die Empfangssignalstärke, der Träger-Rauschabstand oder die statistische Verteilung von **durch** ein Front-End des Empfängers bereitgestellten Abtastwerten überwacht werden.

2. Vorrichtung (10) nach Anspruch 1,
**dadurch gekennzeichnet, dass**
die Mittel (20, 26, 28) zum Erkennen eines aktivierten Störsenders (30) einen in der Positionsbestimmungsvorrichtung (12) eingesetzten Empfänger (20) für Positionsbestimmungssignale, insbesondere Navigationssignale eines Satellitennavigationssystems, aufweisen, wobei der Empfänger (20) weiterhin ausgebildet ist, den Störsender (30) daran zu erkennen, dass der Empfänger (20) während einer vorgegebenen Zeitspanne keine Positionsbestimmung durchführen kann.

3. Vorrichtung (10) nach einem der vorhergehenden Ansprüche,
**dadurch gekennzeichnet, dass**
die Mittel (20, 26, 28) zum Erkennen eines aktivierten Störsenders (30) einen in der Positionsbestimmungsvorrichtung (12) eingesetzten Empfänger (20) für Positionsbestimmungssignale, insbesondere Navigationssignale eines Satellitennavigationssystems, aufweisen, wobei der Empfänger (20) weiterhin ausgebildet ist, Messungen von Positionsbestimmungssignalen auf Konsistenz zu überprüfen, insbesondere unter Einsatz einer RAIM-Technik.

4. Vorrichtung (10) nach einem der vorhergehenden Ansprüche,
**dadurch gekennzeichnet, dass**
die Mittel (20, 26, 28) zum Erkennen eines aktivierten Störsenders (30) einen in der Positionsbestimmungsvorrichtung (12) eingesetzten Empfänger (20) für Positionsbestimmungssignale, insbesondere Navigationssignale eines Satellitennavigationssystems, aufweisen, wobei der Empfänger (20) weiterhin ausgebildet ist, Messungen von Positionsbestimmungssignalen mit Messungen anderer Sensoren, insbesondere einem Wegstreckenmesser (22) und/oder einem Geschwindigkeitsmesser (24), zu vergleichen, um signifikante Abweichungen feststellen zu können, die auf den Einsatz eines Störsenders (30) hindeuten.

5. Vorrichtung (10) nach einem der vorhergehenden Ansprüche,
**dadurch gekennzeichnet, dass**
die Mittel (20, 26, 28) zum Erkennen eines aktivierten Störsenders (30) eine speziell für die Erkennung von Störsendern (30) geeignete Vorrichtung (26) aufweisen.

6. Vorrichtung (10) nach einem der vorhergehenden Ansprüche,
**dadurch gekennzeichnet, dass**
die Mittel (28) zum Auslösen einer Aktion, die von der Positionsbestimmungsvorrichtung (12) und den Mitteln (26) zum Erkennen eines aktivierten Störsenders (30) angesteuert werden können, abhängig von Erkennen eines aktivierten Störsenders (30) ausgebildet sind, über die Sendevorrichtung (14) eine Mitteilung über einen erkannten Störsender (30) über den Kommunikationskanal (18), insbesondere einen Mobilfunkkanal, zu übermitteln.

7. Vorrichtung (10) nach einem der vorhergehenden Ansprüche,
**dadurch gekennzeichnet, dass**
die Mittel (28) zum Auslösen einer Aktion abhängig von Erkennen eines aktivierten Störsenders (30) ausgebildet sind, eine Fahrzeugblockade zu initiieren.

8. Vorrichtung (10) nach Anspruch 7,
**dadurch gekennzeichnet, dass**
die Mittel (28) zum Auslösen einer Aktion abhängig von Erkennen eines aktivierten Störsenders (30) ferner ausgebildet sind, zum Aufheben der Fahrzeugblockade eine Authentifikation anzufordern.

9. Verwendung einer Vorrichtung (10) nach einem der vorhergehenden Ansprüche in einem Objekt, insbesondere einem Fahrzeug, zur Ortung und Verfolgung des Objekts.

## Claims

1. Device (10) for vehicle location and tracking comprising a position finding device (12) for determining a current vehicle position, and
a transmitting device (14) for transmitting the current vehicle position to a receiver (16) via a communication channel (18),
**characterized by**
means (20, 26, 28) for detecting an activated interfering transmitter (30) which sends out an interfering signal within range of the device (10), and for triggering an action in dependence on detecting an activated interfering transmitter, wherein the means (20, 26, 28) for detecting an activated interfering transmitter (30) have a receiver (20), used in the position finding device (12), for position finding signals, particularly navigation signals of a satellite navigation system, wherein the receiver (20) is configured for monitoring one or more received parameters of received position finding signals in order to detect the interfering transmitter (30) which influences these parameters, wherein receiver-internal measurement values of received position finding signals such as the received signal strength, the carrier-noise ratio or the statistical distribution of samples provided by a front-end of the receiver are monitored as received parameters.

2. Device (10) according to Claim 1, **characterized in that** the means (20, 26, 28) for detecting an activated interfering transmitter (30) have a receiver (20), used in the position finding device (12), for position finding signals, particularly navigation signals of a satellite navigation system,
wherein the receiver (20) is also configured to detect the interfering transmitter (30) by the fact that the receiver (20) cannot perform any position finding during a predetermined time interval.

3. Device (10) according to one of the preceding claims, **characterized in that** the means (20, 26, 28) for detecting an activated interfering transmitter (30) have a receiver (20), used in the position finding device (12), for position finding signals, particularly navigation signals of a satellite navigation system, wherein the receiver (20) is also configured to check measurements of position finding signals for consistency, particularly by using a RAIM technology.

4. Device (10) according to one of the preceding claims, **characterized in that** the means (20, 26, 28) for detecting an activated interfering transmitter (30) have a receiver (20), used in the position finding device (12), for position finding signals, particularly navigation signals of a satellite navigation system, wherein the receiver (20) is also configured to compare measurements of position finding signals with measurements of other sensors, particularly an odometer (22) and/or a tachometer (24) in order to be able to find significant deviations which indicate the use of an interfering transmitter (30).

5. Device (10) according to one of the preceding claims, **characterized in that** the means (20, 26, 28) for detecting an activated interfering transmitter (30) have a device (26) suitable especially for detecting interfering transmitters (30).

6. Device (10) according to one of the preceding claims, **characterized in that** the means (28) for triggering an action which can be driven by the position finding device (12) and the means (26) for detecting an activated interfering transmitter (30) are configured, in dependence on detecting an activated interfering transmitter (30), to transmit a message about a detected interfering transmitter (30) via the communication channel (18), especially a mobile radio channel, via the transmitting device (14).

7. Device (10) according to one of the preceding claims, **characterized in that** the means (28) for triggering an action are configured, in dependence on detecting an activated interfering transmitter (30), to initiate a vehicle blockade.

8. Device (10) according to Claim 7, **characterized in that** the means (28) for triggering an action, in dependence on detecting an activated interfering transmitter (30), are also configured to request an authentication for lifting the vehicle blockade.

9. Use of a device (10) according to one of the preceding claims, in an object, particularly a vehicle, for locating and tracking the object.

## Revendications

1. Ensemble (10) de localisation et de suivi de véhicules, présentant un ensemble (12) de détermination de position qui détermine la position effective d'un véhicule et un ensemble émetteur (14) qui transmet la position effective du véhicule à un récepteur (16) par l'intermédiaire d'un canal de communication (18), **caractérisé par**
des moyens (20, 26, 28) de détection d'un émetteur parasite (30) activé qui émet un signal parasite à proximité de l'ensemble (10), ces moyens déclenchant une action en fonction de la détection d'un émetteur parasite activé,
les moyens (20, 26, 28) de détection d'un émetteur parasite (30) activé présentant dans l'ensemble (12) de détermination de position un récepteur (20) de signaux de détermination de position, en particulier des signaux de navigation d'un système de navigation par satellite, le récepteur (20) étant configuré pour surveiller un ou plusieurs paramètres de réception des signaux de détermination de position reçus pour détecter l'émetteur parasite (30) qui agit sur ces paramètres, les paramètres de réception surveillés étant des valeurs de mesure internes au récepteur des signaux de détermination de position reçus, par exemple l'intensité du signal de réception, l'écart entre porteuse et bruit ou la répartition statistique de valeurs d'échantillonnage délivrées par un panneau avant du récepteur.

2. Ensemble (10) selon la revendication 1, **caractérisé en ce que** les moyens (20, 26, 28) de détection d'un émetteur parasite (30) activé présentent dans l'ensemble (12) de détermination de position un récepteur (20) de signaux de détermination de position, en particulier de signaux de navigation d'un système de navigation par satellite, le récepteur (20) étant en outre configuré pour détecter l'émetteur parasite (30) par le fait que le récepteur (20) ne peut exécuter une détermination de position pendant une durée prédéterminée.

3. Ensemble (10) selon l'une des revendications précédentes, **caractérisé en ce que** les moyens (20, 26, 28) de détection d'un émetteur parasite (30) activé présentent dans l'ensemble (12) de détermination de position un récepteur (20) de signaux de détermination de position, en particulier de signaux de navigation d'un système de navigation par satellite, le récepteur (20) étant en outre configuré pour vérifier la consistance de mesures de signaux de détermination de position, en particulier en recourant à une technique RAIM.

4. Ensemble (10) selon l'une des revendications précédentes, **caractérisé en ce que** les moyens (20, 26, 28) de détection d'un émetteur parasite (30) activé présentent dans l'ensemble (12) de détermination de position un récepteur (20) de signaux de détermination de position, en particulier de signaux de navigation d'un système de navigation par satellite, le récepteur (20) étant en outre configuré pour comparer des mesures de signaux de détermination de position à des mesures d'autres capteurs, en particulier un dispositif (22) de mesure de distance parcourue et/ou un dispositif (24) de mesure de vitesse, pour pouvoir constater des écarts significatifs qui indiquent l'utilisation d'un émetteur parasite (30).

5. Ensemble (10) selon l'une des revendications précédentes, **caractérisé en ce que** les moyens (20, 26, 28) de détection d'un émetteur parasite (30) activé présentent un ensemble (26) conçu spécialement pour la détection d'émetteurs parasites (30).

6. Ensemble (10) selon l'une des revendications précédentes, **caractérisé en ce que** les moyens (28) de déclenchement d'une action qui peuvent être commandés par l'ensemble (12) de détermination de position et par les moyens (26) de détection d'un émetteur parasite (30) activé peuvent, en fonction de la détection d'un émetteur parasite (30) activé, être configurés pour transmettre par l'intermédiaire de l'ensemble émetteur (14) un message concernant un émetteur parasite (30) détecté, par l'intermédiaire du canal de communication (18), en particulier un canal de radiotéléphonie mobile.

7. Ensemble (10) selon l'une des revendications précédentes, **caractérisé en ce que** les moyens (28) de déclenchement d'une action sont configurés, en fonction de la détection d'un émetteur parasite (30) activé, pour lancer un blocage du véhicule.

8. Ensemble (10) selon la revendication 7, **caractérisé en ce que** les moyens (28) de déclenchement d'une action sont en outre configurés pour, en fonction de la détection d'un émetteur parasite (30) activé, demander une authentification pour supprimer le blocage du véhicule.

9. Utilisation d'un ensemble (10) selon l'une des revendications précédentes dans un objet, en particulier un véhicule, en vue de la localisation et du suivi de l'objet.
